Europäisches Patentamt

European Patent Office

Office européen des brevets

(11) Veröffentlichungsnummer: **0 122 668**
**A2**

(12) # EUROPÄISCHE PATENTANMELDUNG

(21) Anmeldenummer: 84200490.5

(51) Int. Cl.³: **A 22 B 5/12**

(22) Anmeldetag: 05.04.84

(30) Priorität: 08.04.83 DE 3312727

(43) Veröffentlichungstag der Anmeldung:
24.10.84 Patentblatt 84/43

(84) Benannte Vertragsstaaten:
AT BE CH DE FR GB IT LI LU NL SE

(71) Anmelder: MACHINEFABRIEK G.J. NIJHUIS B.V.
Parallelweg 4 Postbus 102
NL-7100 AC Winterswijk(NL)

(84) Benannte Vertragsstaaten:
BE FR GB LU NL SE

(71) Anmelder: Abele, Günter
Daimlerstrasse 6
D-7091 Neuler(DE)

(84) Benannte Vertragsstaaten:
CH DE IT LI AT

(72) Erfinder: Abele, Günter
Daimlerstrasse 6
D-7091 Neuler(DE)

(74) Vertreter: van der Beek, George Frans et al,
Nederlandsch Octrooibureau Johan de Wittlaan 15 P.O.
Box 29720
NL-2502 LS The Haque(NL)

(54) Vorrichtung zum Brühen von Schlachttierkörpern.

(57) Vorrichtung zum Brühen von Schlachttierkörpern, insbesondere Schweinekörpern, vor dem Enthaaren, mit einem Brühwasserbottich und einer mit einem Antrieb ausgerüsteten Fördereinrichtung, die längs einer Umlaufbahn bewegbare, voneinander beabstandete Förderorgane für die Schlachttierkörper aufweist, wobei die Umlaufbahn mindestens auf einem Teil ihrer Länge durch den Brühwasserbottich führt. Der Antrieb weist eine mit Druckfluid zu betätigende Zylinder-Kolben-Einheit (24) zum schrittweisen Vorwärtsbewegen der Fördereinrichtung (8) auf. Vorzugsweise sind eine mit Druckfluid zu betätigende erste Verbindungseinrichtung (30, 32, 34) und eine mit Druckfluid zu betätigende zweite Verbindungs einrichtung (30, 38, 40) vorgesehen, wobei die erste Verbindungs-einrichtung zwischen der Förderorgananordnung (10, 12) oder einem jeweiligen Förderorgan wirkt und die zweite Verbindungseinrichtung zur Festlegung der Förderorgananordnung oder eines jeweiligen Förderorgans dient.

EP 0 122 668 A2

./...

FIG.2

## Vorrichtung zum Brühen von Schlachttierkörpern

Die Erfindung bezieht sich auf eine Vorrichtung zum Brühen von Schlachttierkörpern, insbesondere Schweinekörpern, vor dem Enthaaren, mit einem Brühwasserbottich und einer mit einem Antrieb ausgerüsteten Fördereinrichtung, die längs einer Umlaufbahn bewegbare, voneinander beabstandete Förderorgane für die Schlachttierkörper aufweist, wobei die Umlaufbahn mindestens auf einem Teil ihrer Länge durch den Brühwasserbottich führt.

Bei herkömmlichen Vorrichtungen dieser Art sind die Förderorgane nach außen ragend an einer Welle befestigt, die von einem Elektromotor über ein mechanisches Getriebe in Drehung versetzt wird. Die erforderlichen Antriebskräfte sind sehr hoch, da nicht nur die Welle mit den Förderorganen, sondern insbesondere auch eine größere Anzahl von Schlachttierkörpern, die sich unter der Einwirkung der Förderorgane zugleich im Brühwasserbottich befinden, bewegt werden müssen. Es hat sich gezeigt, daß die herkömmlichen mechanischen Antriebe verschleiß- und bruchanfällig sind oder übermäßig kräftig dimensioniert werden müssen.

Der Erfindung liegt die Aufgabe zugrunde, eine gattungsgemäße Vorrichtung zu schaffen, deren Antrieb besser auf den rauhen Schlachtbetrieb und die bei derartigen Vorrichtungen vorkommenden Bewegungsbedingungen zugeschnitten ist.

Zur Lösung dieser Aufgabe ist die Vorrichtung erfindungsgemäß dadurch gekennzeichnet, daß der Antrieb eine mit Druckfluid zu betätigendes Zylinder-Kolben-Einheit zum schrittweisen Vorwärtsbewegen der Fördereinrichtung aufweist.

Der erfindungsgemäße Antrieb ist besonders robust und dauerhaft, da die Zylinder-Kolben-Einheit ohne Getriebe oder dgl. hohe Kräfte liefern kann. Außerdem ist die erfindungsgemäße Bauart des Antriebs der Möglichkeit der schrittweisen Weiterbewegung der Fördereinrichtung besonders angepaßt; eine derartige schrittweise oder intermittierende Betriebsweise ist besonders vorteilhaft in den Fällen, in denen man einer nachgeschalteten Enthaarungsmaschine nach einer durch den Enthaarungsvorgang vorgegebenen Zeit jeweils einen oder gleichzeitig mehrere Schlachttierkörper neu von der Brühvorrichtung her zuführen will.

Die Umlaufbahn der Förderorgane führt vorzugsweise auf einem unteren Teilbereich durch den Brühwasserbottich und oberhalb des Brühwasserspiegels zurück. Man kann aber auch eine Umlaufbahn der Förderorgane gänzlich unterhalb des Brühwasserspiegels vorsehen, beispielsweise in einer waagerechten Ebene liegend. Die Umlaufbahn kann eine Kreisbahn, eine ovale Umlaufbahn mit zwei Umlenkbereichen der Förderorgane oder irgendeine andere geschlossene Umlaufbahn sein. Als Druckfluid kommt in erster Linie eine Flüssigkeit in Betracht, obwohl auch ein gasförmiges Druckfluid prinzipiell brauchbar ist.

Vorzugsweise weist die erfindungsgemäße Vorrichtung eine schaltbare erste Verbindungseinrichtung auf, mit der die Zylinder-Kolben-Einheit wahlweise mit der Förderorgananordnung oder einem jeweiligen Förderorgan antriebskraftübertragend verbindbar oder von dieser (diesem) trennbar ist. Mittels dieser Ausgestaltung läßt sich auf besonders einfache Weise der Vorwärtshub der Zylinder-Kolben-Einheit in Vorwärtsbewegung eines Förderorgans oder der gesamten Förderorgananordnung umsetzen, während der Rückwärtshub ohne Antriebskraftleistung erfolgt.

In bevorzugter Weiterbildung der Erfindung weist die Vorrichtung eine schaltbare zweite Verbindungseinrichtung auf, mit der die Förderorgananordnung oder ein jeweiliges

- 3 -

Förderorgan wahlweise stationär festlegbar oder für die Vorwärtsbewegung freigebbar ist. Hierdurch läßt sich auf einfache Weise sicherstellen, daß die Fördereinrichtung während des Rückwärtshubs der Zylinder-Kolben-Einheit keine unbeabsichtigten Bewegungen ausführt, obwohl gewisse kleinere Bewegungen während des Rückwärtshubs der Zylinder-Kolben-Einheit bei vielen Ausführungsformen nicht störend sind. Es versteht sich, daß die zweite Verbindungseinrichtung während des Vorwärtshubs der Zylinder-Kolben-Einheit ausgeschaltet wird, also in die Freigebstellung geschaltet wird.

Vorzugsweise sind die einzelnen Förderorgane zu einer Förderorgananordnung mit größenordnungsmäßig gleichbleibendem Abstand gekoppelt. Man könnte aber auch daran denken, die Förderorgane einzeln längs der Umlaufbahn bewegbar zu machen, die Förderorgane einzeln vorwärtsbewegend anzutreiben und dabei die vor dem jeweils angetriebenen Förderorgan befindlichen Förderorgane mit dem Antrieb weiterzuschieben.

Besonders bevorzugte Ausbildungen der ersten und der zweiten Verbindungseinrichtung sind in den Ansprüchen 4 und 5 angegeben, wobei das erforderliche Druckfluid sowieso für die antreibende Zylinder-Kolben-Einheit zur Verfügung stehen muß. Es wird jedoch darauf hingewiesen, daß es eine Reihe weiterer Möglichkeiten zur Ausbildung der Verbindungseinrichtungen gibt, beispielsweise Klinken, zeitweise sperrbare Zahnräder und dgl. Die Verbindungseinrichtungen können beispielsweise auch mechanisch oder magnetisch geschaltet werden. Als besonders einfache Art der Verbindungseinrichtungen seien noch federnde Rastklinken genannt, die bei der ersten Verbindungseinrichtung in der einen Richtung und bei der zweiten Verbindungseinrichtung in der anderen Richtung wirken.

In Anspruch 6 ist eine besonders einfache Möglichkeit der
Anordnung der Förderorgane angegeben. Dabei kann jedes
Förderorgan aus einer axial ausgerichteten Reihe von axial
beabstandeten Stangen bestehen, so daß sich bei jedem
Förderorgan eine rechenartige Konfiguration ergibt. Insbesondere bei nicht-kreisförmigen Umlaufbahnen kann man die
Förderorgane als Teil einer kettenartigen oder doppelkettenartigen Anordnung vorsehen, von der die einzelnen
Förderorgane nach außen fortragen, wodurch Umlaufbahnen
mit sehr frei wählbarer Geometrie verwirklichbar sind.

In Anspruch 7 ist eine besonders einfache, bevorzugte
Möglichkeit des Zusammenwirkens der für den Antrieb vorgesehenen Zylinder-Kolben-Einheit mit der eigentlichen
Fördereinrichtung angegeben. Wenn man insbesondere vorsieht,
daß die erste und/oder die zweite Verbindungseinrichtung
jeweils einen bolzenartigen Mitnehmer in eine der Bohrungen
ausfahren bzw. einfahrend aus dieser zurückziehen, dann
hat man eine besonders robuste, einfach herstellbare Art
der Antriebskraftübertragung von der Zylinder-Kolben-Einheit
auf die die Förderorgane tragende Welle.

Man kann mit der als Antrieb vorgesehenen Zylinder-Kolben-
Einheit unmittelbar auf die Förderorgananordnung oder
das jeweils vorwärtszubewegende Förderorgan arbeiten. Insbesondere im Fall eines Antriebs der Fördereinrichtung
auf einem gekrümmten Bereich der Umlaufbahn der Förderorgane ist es jedoch als günstig bevorzugt, einen Schwenkhebel vorzusehen, der mit der als Antrieb vorgesehenen
Zylinder-Kolben-Einheit verbunden ist und die erste Verbindungseinrichtung trägt, wobei vorzugsweise die Schwenkachse des Schwenkhebels mit der Mittelachse der Welle
zusammenfällt. Ein derartiger Schwenkhebelantrieb ist nicht
nur bei einer die Förderorgane tragenden Welle und kreisförmiger Umlaufbahn brauchbar, sondern beispielsweise auch bei einer Umlaufbahn, die über zwei Umlenkräder bzw. Umlenktrommeln geführt ist.

Bevorzugte Mittel der Ausbildung der Steuerung des Bewegungsablaufs der erfindungsgemäßen Vorrichtung sind in den Ansprüchen 9 und 10 angegeben.

Vorzugsweise befinden sich die als Antrieb vorgesehene Zylinder-Kolben-Einheit und/oder die erste Verbindungseinrichtung und/oder die zweite Verbindungseinrichtung außerhalb des Brühwassers.

Die Erfindung und Weiterbildungen der Erfindung werden im folgenden anhand eines zeichnerisch dargestellten Ausführungsbeispiels noch näher erläutert. Es zeigen:

Fig. 1       eine Seitenansicht einer Brühvorrichtung mit anschließender Enthaarungsmaschine, wobei zum Zweck des erleichterten Überblicks der Antrieb der Fördereinrichtung nicht miteingezeichnet ist;

Fig. 2       eine Stirnansicht der Welle der Fördereinrichtung mit eingezeichnetem Antrieb.

Bei beiden Figuren ist die Blickrichtung in Achsrichtung der Welle der Fördereinrichtung.

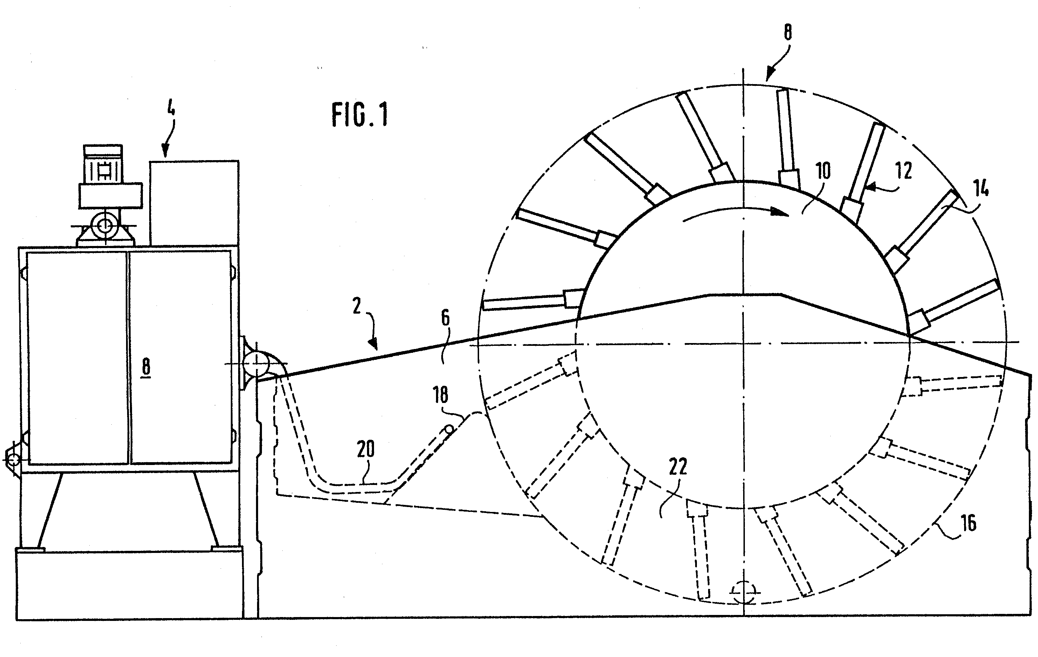

In Fig. 1 erkennt man einen Brühbottich 2, der insgesamt betrachtet eine im wesentlichen quaderförmige Außenkonfiguration hat. In Fig. 1 links anschließend erkennt man eine Schweineenthaarungsmaschine 4. Die parallel zur Zeichenebene der Fig. 1 liegenden Längswände 6 des Brühbottichs sind im der Enthaarungsmaschine 4 entfernteren Bereich etwas erhöht. Dort ist eine Fördereinrichtung 8 in den beiden Längswänden 6 des Brühbottichs 2 gelagert.

Die Fördereinrichtung besteht im wesentlichen aus einer Welle 10 mit sechszehn von der Welle 10 nach außen ragenden Förderorganen 12. Jedes Förderorgan besteht aus einer Reihe von Stangen 14, die mit gegenseitigem axialen Abstand in Axialrichtung der Welle 10 verteilt angeordnet sind, so daß jedes Förderorgan 12 insgesamt praktisch wie ein Rechen ausgebildet ist. Die Stangen 14 sind jeweils mit ihrem Fuß solide am Außenumfang der Welle 10 befestigt. Die Stangen 14 ragen nicht genau radial nach außen, sondern bilden mit dem Außenumfang der Welle 10 einen von 90 ° abweichenden Winkel derart,

daß ein auf der Eingabeseite des Brühbottichs 2 auf der Höhe der Mittelachse der Welle 10 befindliches Förderorgan 12 leicht nach oben-außen ragt. Im Inneren des Brühbottichs 2 ist ein in der gezeichneten Blickrichtung kreisbogenförmiger Boden 16 vorgesehen, der einen geringfügig größeren Radius als der Außenkreis der Förderorgane 12 hat. Dieser kreisförmige Boden 16 geht links in eine schräg nach links-unten geneigte Fläche 18 über. Wenn ein Förderorgan 12 den Gipfelpunkt zwischen dem links ansteigenden, kreisbogenförmigen Boden 16 und der geneigten Fläche 18 passiert, weist es schräg nach links-unten, und der in Förderrichtung vor diesem Förderorgan 12 befindliche Schweinekörper rutscht aus dem entsprechenden "Fach" zwischen diesem und dem vorhergehenden Förderorgan 12. Die geneigte Fläche 18 ist vom Endbereich eines Einwurfrechens 20 der Enthaarungsmaschine 4 überlagert, so daß der jeweilige Schweinekörper in eine Mulde dieses Einwurfrechens 20 gelangt und durch Verschwenken des Einwurfrechens 20 gegen den Uhrzeigersinn in die Enthaarungsmaschine eingeworfen werden kann. Die nicht gezeichnete Schlägerwalze der Enthaarungsmaschine 4 hat eine parallel zur Welle 10 verlaufende Drehachse.

Die Drehrichtung der Fördereinrichtung 8 ist im Uhrzeigersinn. Etwas weniger als die untere Hälfte der Fördereinrichtung und des Außenumfangs der Welle 10 tauchen in das Brühwasser ein. Der gegenseitige Abstand der Förderorgane 12 in Umfangsrichtung ist so groß, daß ein Schweinekörper in jedem der so gebildeten Fächer 22 Platz findet. In Axialrichtung kann die Vorrichtung so breit sein, daß ein oder mehrere, längs zueinander ausgerichtete Schweinekörper in jedem der Fächer 22 Platz finden.

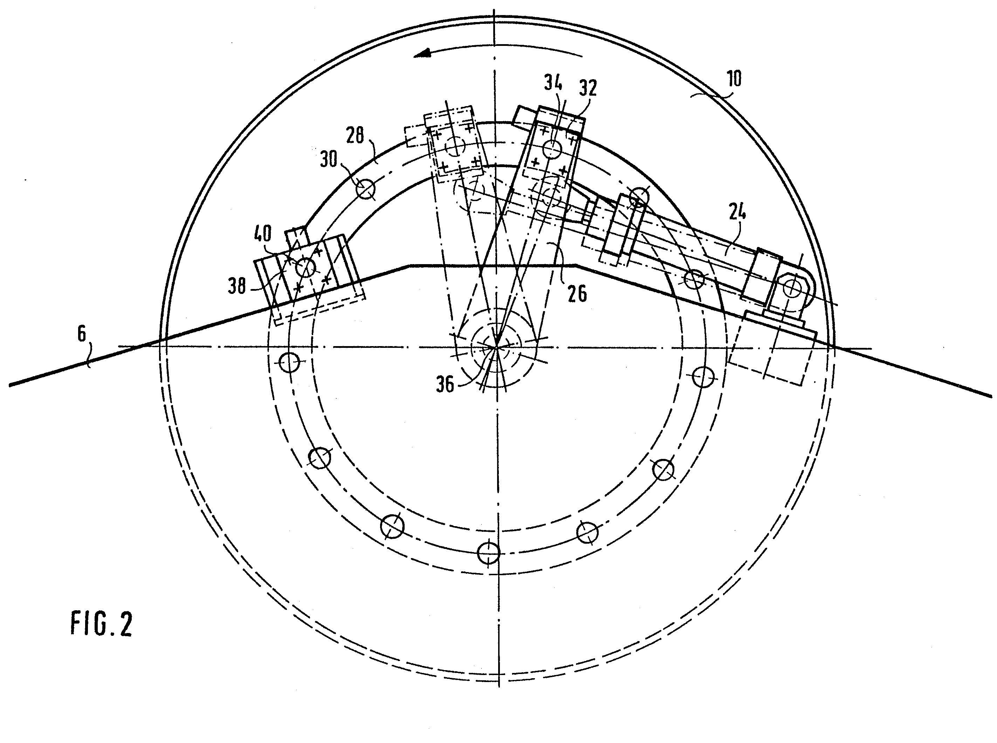

In Fig. 2 erkennt man wiederum die Welle 10 der Fördereinrichtung 8 in vergrößertem Maßstab unter Weglassung der Förderorgane 12. Auf der Oberseite einer Seitenwand 6 des Brühbottichs 2 ist eine Zylinder-Kolben-Einheit 24 mit einem Ende angelenkt. Mit der Welle 10 ist drehfest ein Schwenkhebel 26 verbunden, wobei die Schwenkachse des Schwenkhebels 26 mit der Drehachse der Welle 10 zusammenfällt. Das andere Ende der Zylinder-Kolben-Einheit 24 ist an dem Schwenkhebel 26 ein Stück vor dessen radial äußerem Ende angelenkt. Die Welle 10 weist an ihrer in Fig. 2 gezeichneten Stirnseite einen Ring 28 auf, der umfangsmäßig verteilt eine Reihe von beabstandeten, axialen Bohrungen 30 besitzt. Der Winkelabstand bzw. die Winkelteilung der Bohrungen 30 entspricht dem Winkelabstand bzw. der Winkelteilung der Fußpunkte der Förderorgane 12. Der Schwenkhebel 26 trägt in seinem radial äußeren Endbereich eine Zylinder-Kolben-Einheit 32 mit Bewegungsrichtung in Achsrichtung der Welle 10. Die Zylinder-Kolben-Einheit 32 kann einen Bolzen 34 in eine der Bohrungen 30 vorschieben oder aus dieser zurückziehen. Bei vorgeschobenem Bolzen 34 wird eine drehfeste Verbindung zwischen dem Schwenkhebel 26 und der Welle 10 hergestellt, so daß beim Ausfahren der Zylinder-Kolben-Einheit 24 der Schwenkhebel 26 um einen bestimmten Winkelbereich verschwenkt wird.

Auf der Oberseite der betreffenden Seitenwand 6 des Brühbottichs 2 ist auf der anderen Seite von der Drehachse 36 der Welle 10 wie die Zylinder-Kolben-Einheit 24 eine weitere Zylinder-Kolben-Einheit 38 mit axialer Bewegungsrichtung parallel zur Drehachse 36 angeordnet. Diese Zylinder-Kolben-Einheit 38 kann einen Bolzen 40 in eine der Bohrungen 30 vorschieben oder aus dieser zurückziehen. Bei vorgeschobenem Bolzen 40 ist die Welle 10 drehfest stationär festgelegt; bei herausgezogenem Bolzen 40 ist die Welle 10 für eine Drehung freigegeben.

Die Betriebsweise der Fördereinrichtung ist folgende:
Bei noch in eine Bohrung 30 vorgeschobenem Bolzen 40 wird der Bolzen 34 in eine mehrere Bohrungsabstände entfernte, andere Bohrung 30 vorgeschoben. Dann wird der Bolzen 40 aus der betreffenden Bohrung 30 zurückgezogen. Dann wird die Zylinder-Kolben-Einheit 24 ausgefahren und dreht über den Schwenkhebel 26 und den Bolzen 34 die Welle 10 gegen den Uhrzeigersinn. Das Ende dieses Vorwärtshubs wird durch einen Endschalter, der beispielsweise vom Schwenkhebel 26 betätigt wird, gesteuert. Dieser Vorwärtshub ist gerade so groß, daß sich die nächste Bohrung 30 vor dem Bolzen 40 befindet. Dann wird der Bolzen 40 in diese nächste Bohrung 30 vorgeschoben. Dann wird der Bolzen 34 aus der bisher zugeordneten Bohrung 30 zurückgezogen. Dann durchläuft die Zylinder-Kolben-Einheit 24 einen Rückwärtshub, der - durch einen Endschalter gesteuert - gerade so groß ist, daß sich der Bolzen 34 vor einer nächsten Bohrung 30 befindet. Dann beginnt ein neuer Zyklus dieser Art.

Der geschilderte Betriebsablauf wird vorzugsweise durch eine geeignete Folgesteuerung gesteuert, die ein Fachmann bei Kenntnis der Erfindung erstellen kann.

Die Bohrungen 30 können selbstverständlich ein erweitertes Eintrittsende haben, oder es können kegelige Bolzen 34 und 40 verwendet werden, um ein sicheres Einschieben der Bolzen 34, 40 auch bei nicht ganz exakter Relativstellung zwischen den Bolzen 34, 40 und den Bohrungen 30 zu ermöglichen.

Es wird darauf hingewiesen, daß die Fig. 2 im Gegensatz zur Fig. 1 einen Drehsinn der Welle 10 entgegen dem Uhrzeigersinn sowie dreizehn Bohrungen 30 statt der für die sechzehn Förderorgane 12 an sich erforderlichen sechzehn Bohrungen 30 zeigt.

Günter ABELE
Daimlerstraße 6
7091 Neuler

"Vorrichtung zum Brühen von Schlachttierkörpern"

A n s p r ü c h e:

1. Vorrichtung zum Brühen von Schlachttierkörpern, insbesondere Schweinekörpern, vor dem Enthaaren, mit einem Brühwasserbottich und einer mit einer Antrieb ausgerüsteten Fördereinrichtung, die längs einer Umlaufbahn bewegbare, voneinander beabstandete Förderorgane für die Schlachttierkörper aufweist, wobei die Umlaufbahn mindestens auf einem Teil ihrer Länge durch den Brühwasserbottich führt, dadurch g e k e n n z e i c h n e t , daß der Antrieb eine mit Druckfluid zu betätigende Zylinder-Kolben-Einheit (24) zum schrittweisen Vorwärtsbewegen der Fördereinrichtung (8) aufweist.

2.   Vorrichtung nach Anspruch 1,
g e k e n n z e i c h n e t   durch
eine schaltbare erste Verbindungseinrichtung (30, 32, 34),
mit der die Zylinder-Kolben-Einheit (24) wahlweise mit der
Förderorgananordnung (10, 12) oder einem jeweiligen Förderorgan antriebskraftübertragend verbindbar oder von dieser
(diesem) trennbar ist.

3.   Vorrichtung nach Anspruch 1 oder 2,
g e k e n n z e i c h n e t   durch
eine schaltbare zweite Verbindungseinrichtung (30, 38, 40),
mit der die Förderorgananordnung (10, 12) oder ein jeweiliges
Förderorgan wahlweise gegen Rückwärtsbewegung festlegbar
oder für die Vorwärtsbewegung freigebbar ist.

4.   Vorrichtung nach Anspruch 2 oder 3,
dadurch g e k e n n z e i c h n e t ,
daß die erste und/oder die zweite Verbindungseinrichtung
eine mit Druckfluid zu betätigende Zylinder-Kolben-Einheit
(32; 38) zum Schalten aufweist.

5.   Vorrichtung nach einem der Ansprüche 2 bis 4,
dadurch g e k e n n z e i c h n e t ,
daß die erste und/oder die zweite Verbindungseinrichtung
einen aus- und einfahrbaren Mitnehmer (34, 40) aufweist.

6.   Vorrichtung nach einem der Ansprüche 1 bis 5,
dadurch g e k e n n z e i c h n e t ,
daß die Förderorgane (12) nach außen ragend und umfangsmäßig verteilt an einer rotierbaren Welle (10) befestigt
sind.

7.   Vorrichtung nach Anspruch 6,
dadurch g e k e n n z e i c h n e t ,
daß ein Stirnteil der Welle eine kreisförmig angeordnete
Reihe von Bohrungen (30) aufweist, deren Winkelabstand dem Winkelabstand der Förderorgane (12) entspricht und mit denen die erste und/oder die zweite Verbindungseinrichtung zusammenwirken.

8. Vorrichtung nach einem der Ansprüche 2 bis 7, g e k e n n z e i c h n e t durch einen Schwenkhebel (26), der mit der als Antrieb vorgesehenen Zylinder-Kolben-Einheit (24) verbunden ist und die erste Verbindungseinrichtung (30, 32, 34) trägt, wobei vorzugsweise die Schwenkachse (36) des Schwenkhebels (26) mit der Drehachse (36) der Welle (10) zusammenfällt.

9. Vorrichtung nach einem der Ansprüche 1 bis 8, dadurch g e k e n n z e i c h n e t , daß die beiden Endpositionen der als Antrieb vorgesehenen Zylinder-Kolben-Einheit (24) durch Endschalter gesteuert sind.

10. Vorrichtung nach einem der Ansprüche 3 bis 9, g e k e n n z e i c h n e t durch eine Folgesteuerung, mit der erst die erste Verbindungseinrichtung eingeschaltet und die zweite Verbindungseinrichtung ausgeschaltet werden, dann die als Antrieb vorgesehene Zylinder-Kolben-Einheit für einen Vorwärts-Bewegungshub eingeschaltet wird, dann die zweite Verbindungseinrichtung eingeschaltet und die erste Verbindungseinrichtung ausgeschaltet werden, dann die als Antrieb vorgesehene Zylinder-Kolben-Einheit für einen Rückwärts-Bewegungshub eingeschaltet wird, und dieser Zyklus mehrfach hintereinander durchgeführt wird.

0122668

FIG.1

FIG.2